# EUROPÄISCHE PATENTSCHRIFT

(11) **EP 4 092 899 B1**
(45) Veröffentlichungstag und Bekanntmachung des Hinweises auf die Patenterteilung: **09.12.2026**
(21) Anmeldenummer: 22174651.4
(22) Anmeldetag: 20.05.2022
(51) Int. Cl.: H02M 5/458, G05F 1/40, H02H 9/02, H02P 27/06

(54) **ELEKTRISCHE SCHALTUNG UND ELEKTRISCHE SCHALTANORDNUNG**
ELECTRIC CIRCUIT AND ELECTRICAL SWITCHING ARRANGEMENT
CIRCUIT ÉLECTRIQUE ET DISPOSITIF ÉLECTRIQUE DE COMMUTATION

(30) Priorität: 21.05.2021 DE 202021102812 U
(43) Veröffentlichungstag der Anmeldung: 23.11.2022
(73) Patentinhaber: Michael Koch GmbH, 76698 Ubstadt-Weiher (DE)
(72) Erfinder: SINNER, Joachim, 76698 Ubstadt-Weiher (DE); HAHN, Dominik, 76187 Karlsruhe (DE)
(74) Vertreter: Lichti - Patentanwälte Partnerschaft mbB

(56) Entgegenhaltungen:
- EP-A1- 2 701 299
- US-A1- 2010 192 788
- US-A1- 2012 256 580

## Beschreibung

Die Erfindung betrifft eine elektrische Schaltung und eine elektrische Schaltanordnung zum Optimieren des Betriebs eines Zwischenkreises.

Aus dem Stand der Technik (siehe zum Beispiel das Dokument US 2012/256580 A1) sind Schaltanordnungen bekannt, bei denen ein elektrischer Verbraucher über einen Zwischenkreis mit einem elektrischen Versorgungsnetz verbunden ist, wobei der Verbraucher in erster Linie elektrische Energie aus dem Versorgungsnetz bezieht. Die Schaltanordnungen weisen üblicherweise eine Energiespeichereinheit auf, um den Verbraucher bei einem erhöhten Leistungsbedarf mit Energie aus der Energiespeichereinheit zu unterstützen. Zum Schutz der Komponenten der Schaltanordnungen weisen die Verbindungsleitungen zum Versorgungsnetz Sicherungen auf, die zur Vermeidung von Schäden aufgrund von Überspannungen hinsichtlich des jeweiligen Anwendungszwecks ausgelegt sein müssen.

Nachteilig ist dabei, dass die Sicherungen dadurch insbesondere für pulsartige, also kurzfristige erhebliche Stromforderungen des Zwischenkreises an das Versorgungsnetz dimensioniert sein müssen, um ein Ausfallen der Schaltanordnung in jedem Fall zu vermeiden. Dadurch sind aber die bekannten Schaltanordnungen für Anwendungsfälle, in denen diese pulsartigen Stromforderungen nicht kontinuierlich auftreten, was den meisten Anwendungsfällen entspricht, überdimensioniert und teuer.

Die Aufgabe der Erfindung besteht daher darin, die Nachteile aus dem Stand der Technik zu beseitigen und insbesondere eine optimierte Dimensionierung der Schaltanordnung zu ermöglichen.

Die Aufgabe wird durch eine elektrische Schaltung gemäß Anspruch 1 gelöst, wobei die elektrische Schaltung eine elektrische Regelvorrichtung aufweist. Außerdem wird die Aufgabe durch eine elektrische Schaltanordnung mit der erfindungsgemäßen Schaltung gelöst, wobei die Schaltung mit einem elektrischen Versorgungsnetz und mit einem elektrischen Verbraucher verbunden ist.

Im Sinne der Erfindung bezeichnet der Effektivstromwert jenen Wert, den ein Gleichstrom haben müsste, um die gleiche Wärmeleistung in einem rein ohmschen Verbraucher umzusetzen wie die insbesondere zeitlich veränderlichen Stromstärke zwischen dem Versorgungsnetz und dem Zwischenkreis.

Die Erfindung basiert auf der Erkenntnis, dass bei der Dimensionierung der bekannten Schaltanordnungen stets auf die mittlere Stromstärke zwischen dem Zwischenkreis und dem Versorgungsnetz abgestellt wird. Im Sinne der Erfindung bezeichnet der Parameter der im Rahmen der bekannten Schaltanordnungen verwendeten mittleren Stromstärke den zeitlichen Mittelwert des Betrages des Stromwertes, mithin der zeitliche Mittelwert der gleichgerichteten Stromstärke. Diese mittlere Stromstärke wird auch als Gleichrichtwert der Stromstärke bezeichnet. Die mittlere Stromstärke bildet aber den zeitlichen Verlauf der tatsächlichen Belastung durch den Effektivstrom häufig nicht, jedenfalls nur ungenügend ab. Insbesondere pulsartige Stromforderungen lassen sich nicht durch eine reine Bestimmung der mittleren Stromstärke erkennen, so dass die Dimensionierung der Sicherungen für die Schaltanordnung entsprechend groß ausfallen muss, um Schäden aufgrund der nicht erkennbaren, insbesondere pulsartigen Stromforderungen zu vermeiden.

Die Erfindung berücksichtigt dabei, dass für die Komponenten der Schaltanordnung, insbesondere für dessen Verbraucher und die Sicherungen, der Effektivstromwert entscheidend ist, da sich hieraus die Belastung des vorgelagerten Versorgungsnetzes ergibt. Die Höhe des Effektivstroms hängt von den Netzanschlussbedingungen und der Ausgestaltung des Zwischenkreises ab und ist daher für den Endanwender nicht immer abschätzbar. Wenn der Effektivstromwert durch eine ungünstige Stromform erhöht ist, ist dies durch die ausschließliche Betrachtung der mittleren Stromstärke, wie dies bei den bekannten Schaltanordnungen erfolgt, nicht erkennbar. Insbesondere die Nutzung von Diodengleichrichterschaltungen in Verbindung mit Kondensatoren führt zu einer Erhöhung des Effektivstroms gegenüber der mittleren Stromstärke. Durch die Regelung des Energieflusses in Abhängigkeit von dem Effektivstromwert zwischen dem Versorgungsnetz und dem Zwischenkreis, beispielsweise mittels der Regelvorrichtung, lassen sich pulsartige Stromforderungen frühzeitig erkennen, so dass in diesem Fall die kurzfristig benötigte elektrische Energie dem Zwischenkreis mindestens teilweise aus der Energiespeichereinheit zur Verfügung gestellt werden kann. Dies führt insgesamt zu einer Vergleichmäßigung der Stromentnahme aus dem Versorgungsnetz. Dadurch ist insbesondere eine optimierte Auslegung der Sicherungen der Schaltanordnung möglich, was sich kostensenkend auswirkt.

Vorzugsweise ist die Regelvorrichtung dazu ausgestaltet, dass im Rahmen der erfindungsgemäßen Regelung des Energieflusses zwischen dem Zwischenkreis und der Energiespeichereinheit die elektrische Energie von der Energiespeichereinheit in Abhängigkeit von dem Betriebspunkt der Energiespeichereinheit und/oder des Verbrauchers entnommen wird.

In einer weiteren Ausgestaltung der Erfindung ist die Regelvorrichtung dazu ausgestaltet, den Effektivstromwert in Abhängigkeit von der Stromstärke zwischen dem Versorgungsnetz und dem Zwischenkreis zu bestimmen, insbesondere auf der Grundlage einer Messung der Stromstärke zwischen dem Versorgungsnetz und dem Zwischenkreis für eine vordefinierte zeitliche Dauer, die vorzugsweise der Hälfte der zeitlichen Periode der Wechselspannung des Versorgungsnetzes entspricht, was beispielsweise in Europa einem Zeitintervall von 10 ms entspricht. Die zeitliche Dauer entspricht vorzugsweise der doppelten Frequenz der Wechselspannung des Versorgungsnetzes. Insbesondere für den Fall, dass der Strom des Versorgungsnetzes drei Phasen aufweist, kann die zeitliche Dauer zwischen 1 ms bis 10 ms, insbesondere zwischen 1 ms bis 7 ms, vorzugsweise zwischen 1,5 ms und 3,5 ms betragen. Die zeitliche Dauer kann der halben oder der einfachen Sechspulsgleichtungswelligkeitsfrequenz entsprechen, was in Europa in etwa 3,33 ms bzw. 1,67 ms entspricht. Hierdurch lässt sich die Regelung beschleunigen. Ein in diesem Zeitintervall erfasstes Maximum der Stromstärke kann zur Bestimmung der Effektivstromstärke verwendet werden, beispielsweise durch Multiplikation mit einem benutzerdefinierten Faktor. Die Bestimmung des Effektivstromwertes erfolgt vorzugsweise auf der Grundlage der aktuellen Stromstärke zwischen dem Versorgungsnetz und dem Zwischenkreis. In einer Weiterbildung der Erfindung wird zur Bestimmung des Effektivstromwertes ein Mittelwert gebildet, der den über die zeitliche Dauer gemessenen Stromstärken entspricht. Die Regelvorrichtung kann dazu ausgestaltet sein, die aktuelle Stromstärke transformatorisch zu messen, wobei die aktuelle Stromstärke insbesondere durch einen vordefinierten Faktor skaliert wird, um elektronische Komponenten vor Überlastung zu schützen.

Für den Fall, dass der vom Versorgungsnetz bezogene Strom mehrere Phasen, insbesondere Stromphasen, aufweist, kann die Regelvorrichtung dazu ausgebildet sein, den Effektivstromwert auf der Grundlage von mindestens zwei Phasen des Versorgungsnetzes, insbesondere auf der Grundlage von zwei, drei oder sämtlichen Phasen, insbesondere Stromphasen, des Versorgungsnetzes zu bestimmen. In einer Weiterbildung der Erfindung ist zur Bestimmung des Effektivstromwertes die Regelvorrichtung dazu ausgebildet, die Stromstärke von mindestens einer Phase des Stroms des Versorgungsnetzes rechnerisch zu bestimmen, was die Regelung insgesamt beschleunigt.

Die Regelvorrichtung kann dazu ausgestaltet sein, dass bei der Bestimmung des Effektivstromwertes die Stromformen des Zwischenkreises und/oder der mindestens einen Energiespeichereinheit und/oder des Versorgungsnetzes berücksichtigt werden. Vorzugsweise erfolgt die Bestimmung des Effektivstromwertes in Abhängigkeit von einem der Stromform zugeordneten Formfaktor, der insbesondere vom Betriebspunkt, der Induktivität des Versorgungsnetzes und/oder der Kapazität des Zwischenkreises abhängig ist.

Vorzugsweise ist die Regelvorrichtung dazu ausgebildet, den Effektivstromwert mit einem benutzerdefinierten Sollwert zu vergleichen und in Abhängigkeit dieses Vergleichs insbesondere eine Entladung der Energiespeichereinheit oder eine Aufladung der Energiespeichereinheit oder insbesondere keine Aktion der Energiespeichereinheit zu bewirken. Dadurch kann der Energiespeicher insbesondere in einer Zeit mit vergleichsweise geringem Strombedarf des Verbrauchers aufgeladen werden.

Die Regelvorrichtung kann dazu ausgebildet sein, auf der Grundlage des Effektivstromwertes, insbesondere auf der Grundlage des Vergleichs, ein Steuersignal zu bestimmen, das anschließend an die mindestens eine Energiespeichereinheit, insbesondere an einer Steuereinrichtung der Energiespeichereinheit, übermittelt wird, um hierdurch die Regelung des Energieflusses vorzunehmen. Bei der Bildung des Steuersignals können die Anzahl der Energiespeichereinheiten und/oder die Anzahl der Gleichspannungswandler und/oder die Anzahl der Energiespeicher der Energiespeichereinheiten berücksichtigt werden, um eine optimale Ansteuerung der Energiespeichereinheiten zu gewährleisten. Insbesondere können für den Fall, dass eine Energiespeichereinheit mehrere Gleichspannungsrichter aufweist, jeweils den Gleichspannungsrichtern zugeordnete, insbesondere unterschiedliche Steuersignale übermittelt werden, um beispielsweise für jeden Gleichspannungswandler fest vorgegebene Stromgrenzwerte einzuhalten.

Die Regelvorrichtung ist vorzugsweise dazu ausgebildet, dass das Steuersignal eine Änderung eines Parameters der Energiespeichereinheit bewirkt, wobei der Parameter insbesondere ein Spannungsparameter ist und das Lade- und Entladeverhalten der Energiespeichereinheit bestimmt. Dadurch wird das Risiko einer Überladung der Energiespeichereinheit minimiert. In einer vorteilhaften Weiterbildung der Erfindung entspricht der Parameter der Energiespeichereinheit deren Trennspannung.

Zur Gewährleistung eines sicheren Betriebs kann die Regelvorrichtung dazu ausgebildet sein, dass die Regelung des Energieflusses zwischen der mindestens einen Energiespeichereinheit und dem Zwischenkreis derart erfolgt, dass ein benutzerdefinierter Wert für die effektive Stromstärke zwischen dem Zwischenkreis und dem Versorgungsnetz, insbesondere für ein benutzerdefiniertes Zeitintervall, nicht überschritten wird. Der benutzerdefinierte Wert entspricht insbesondere der jeweils vorgesehenen Sicherung und kann alternativ oder zusätzlich einer Spannung, Leistung und/oder einem Effektivwert einer dieser Größen zugeordnet sein. Dadurch ist gewährleistet, dass auch ein erhöhter Energiebedarf des Zwischenkreises nicht zu einem wesentlich erhöhten Energiefluss zwischen dem Versorgungsnetz und dem Zwischenkreis führt.

In einer weiteren Ausgestaltung der Erfindung ist die Regelvorrichtung dazu ausgestaltet, dass nach der Übermittlung des Steuersignals an die mindestens eine Energiespeichereinheit eine erneute Regelung erst nach einer benutzerdefinierten Zeitdauer beginnt. Diese Zeitdauer kann funktional einer Totzeit entsprechen. Dadurch wird vermieden, dass eine Reglung vorgenommen wird, bevor das Steuersignal korrekt verarbeitet wurde. Auf diese Weise werden unerwünschte Rückkopplungseffekte unterbunden.

In einer weiteren Ausgestaltung der Erfindung ist die Regelvorrichtung dazu ausgestaltet, den aktuellen Ladezustand und/oder das Lade- und/oder das Entladeverhalten des Energiespeichers insbesondere kontinuierlich zu überwachen. Für den Fall, dass eine dem Ladezustand des Energiespeichers zugeordnete Kenngröße unter- oder überschritten wird, kann die Regelvorrichtung dazu ausgestaltet sein, ein Warnsignal auszugeben, um auf eine drohende Ent- bzw. Überladung des Energiespeichers hinzuweisen.

Der Verbraucher kann ein Motor, insbesondere ein Elektromotor sein. Vorzugsweise kann der Verbraucher einen generativen Betriebszustand aufweisen, in dem elektrische Energie dem Zwischenkreis zur Verfügung gestellt wird, um beispielsweise die elektrische Energiespeichereinheit aufzuladen.

Die Regelvorrichtung kann im Sinne der Erfindung zumindest mittelbar mit der Leitung zwischen dem Versorgungsnetz und dem Zwischenkreis verbindbar sein. Die Regelvorrichtung kann zumindest mittelbar mit dem Versorgungsnetz und mit dem Zwischenspeicher verbindbar sein, um den Effektivstromwert zwischen dem Versorgungsnetz und dem Zwischenkreis zu bestimmen.

In einer Weiterbildung der Erfindung ist die Regelvorrichtung über mindestens eine Messleitung mit der mindestens einen Leitung zwischen dem Versorgungsnetz und dem Zwischenkreis und/oder über mindestens eine Datenleitung mit der mindestens einen elektrischen Energiespeichereinheit verbunden. Zur insbesondere transformatorischen Messung der aktuellen Stromstärke können die Messleitungen über eine Strommesseinrichtung mit der Leitung zwischen dem Versorgungsnetz und dem Zwischenkreis verbunden sein, wobei die Strommesseinrichtung insbesondere einen Stromwandler aufweist, der die aktuellen Stromstärke insbesondere um einen vordefinierten Faktor skaliert, vorzugsweise unter Beibehaltung der Stromform.

Vorzugsweise ist die Regelvorrichtung dazu ausgebildet, dass bei einem Energiefluss von der mindestens einen elektrischen Energiespeichereinheit zu dem Zwischenkreis ein virtueller Effektivstromwert bestimmt wird, der dem Energiefluss von der mindestens einen elektrischen Energiespeichereinheit zu dem Zwischenkreis entspricht, und dass der Energiefluss zwischen dem Zwischenkreis und der mindestens einen elektrischen Energiespeichereinheit in Abhängigkeit von dem virtuellen Effektivstromwert geregelt wird, falls der virtuelle Effektivstromwert einen definierten Schwellenwert übersteigt, wobei der definierte Schwellenwert insbesondere dem benutzerdefinierten Sollwert für die Stromstärke und/oder dem benutzerdefinierten Wert für die Stromstärke zwischen dem Zwischenkreis und dem Versorgungsnetz, der nicht überschritten werden darf, entspricht. Hierdurch wird vermieden, dass am Ende eines Entladevorgangs der Energiespeichereinheit, bei dem elektrische Energie von der Energiespeichereinheit zu dem Zwischenkreis fließt, insbesondere am Ende eines Vorgangs, bei dem zuvor gespeicherte Bremsenergie von der Energiespeichereinheit zu dem Zwischenkreis fließt, was auch als Bremsenergieabbauphase bezeichnet wird, die gesamte Stromforderung des Verbrauchers nunmehr schlagartig an das Versorgungsnetz gerichtet wird. Diese plötzliche Stromforderung würde aufgrund der zeitlichen Kürze einen großen Stromfluss von dem Versorgungsnetz zum Zwischenkreis bewirken, der die Sicherung der Schaltung auslösen könnte. Durch die Bestimmung des virtuellen Effektivstromwerts und einer hierauf basierenden Regelung des Energieflusses zwischen dem Zwischenkreis und der mindestens einen Energiespeichereinheit wird eine Vergleichmäßigung des Stromflusses zwischen dem Versorgungsnetz und der mindestens einen Energiespeichereinheit erreicht. Dies kann sich beispielsweise dadurch äußern, dass bereits vor dem Ende des Entladevorgangs der mindestens einen Energiespeichereinheit bereits ein, insbesondere gesteigerter, Stromfluss aus dem Versorgungsnetz erfolgt, bevor die Entladung der mindestens einen Energiespeichereinheit vollständig endet.

Die Bestimmung des virtuellen Effektivstromwerts erfolgt vorzugsweise bei einem netzstromunabhängigen Energiefluss von der mindestens einen elektrischen Energiespeichereinheit zu dem Zwischenkreis, mithin dann, wenn ein Energiefluss von dem Versorgungsnetz zu dem Zwischenkreis erfolgt und/oder wenn kein derartiger Energiefluss erfolgt. Alternativ oder zusätzlich dazu kann vorgesehen sein, dass nach dem Ende des eigentlichen Entladevorgangs noch immer, aufgrund der auf dem virtuellen Effektivstromwert basierenden Regelung, für ein benutzerdefiniertes Zeitintervall ein, insbesondere geringerer, Stromfluss aus der mindestens einen Energiespeichereinheit zu dem Zwischenkreis erfolgt. In beiden Fällen wird, jeweils und zusammen genommen, die Stromforderung aus dem Versorgungsnetz vergleichmäßigt, was eine optimierte Dimensionierung der Schaltanordnung erlaubt.

Die Regelvorrichtung ist vorzugsweise mit mindestens einer Steuereinrichtung der mindestens einen Energiespeichereinheit und/oder mit mindestens einem Gleichspannungswandler der mindestens einen Energiespeichereinheit verbindbar, wobei Gleichspannungswandler auch als DC-DC-Steller bezeichnet werden. Daneben kann die Regelvorrichtung mit der Leitung zwischen einem Versorgungsnetz und dem Zwischenspeicher und/oder mit der Energiespeichereinheit lösbar verbindbar und/oder nachrüstbar sein. Insbesondere kann die Regelvorrichtung dadurch mit bereits bestehenden Schaltungen verbindbar sein, ohne dass es einer weiteren Anpassung der Schaltungen bedarf, so dass die Regelvorrichtung als Plug-and-Play-Komponente ausgestaltet sein kann.

Vorzugsweise weist die Regelvorrichtung mindestens eine Verarbeitungseinheit zum Generieren eines Steuersignals auf, wodurch die Energiespeichereinheit ansteuerbar ist. Die Verarbeitungseinheit weist hierzu vorzugsweise einen Regler, insbesondere einen PID-Regler auf. Alternativ oder zusätzlich dazu kann die Regelvorrichtung mindestens eine, insbesondere mindestens zwei mit der Verarbeitungseinheit verbundene Gleichrichterschaltungen aufweisen. Durch die Gleichrichterschaltungen ist eine besonders einfache Bestimmung des Effektivstromwertes bei einem anliegenden Wechselstrom möglich. Die Anzahl der Gleichrichterschaltungen entspricht vorzugsweise der Anzahl der Phasen des Versorgungsnetzes. In einer Weiterbildung der Erfindung weist die Regelvorrichtung genau zwei oder genau drei Gleichrichterschaltungen auf. Die Gleichrichterschaltungen sind vorzugsweise als Brückengleichrichterschaltungen ausgestaltet, was eine besonders einfache Bestimmung des Effektivstromwertes ermöglicht. Sämtliche Komponenten der Regelvorrichtung können in einem gemeinsamen Gehäuse angeordnet und/oder integriert ausgestaltet sein.

Die Regelvorrichtung kann mit der Leitung zwischen dem Versorgungsnetz und dem Zwischenspeicher verbunden sein, um auf diese Weise den Effektivstromwert der Leitung zu bestimmen. Die Energiespeichereinheit weist insbesondere mindestens einen Energiespeicher und/oder mindestens einen Gleichspannungswandler auf, der mit dem Energiespeicher verbunden ist. Der Energiespeicher kann als Kondensator ausgebildet sein. Der Zwischenkreis und/oder die mindestens eine elektrische Energiespeichereinheit können mit Gleichstrom betrieben sein.

Vorzugsweise weist die mindestens eine elektrische Energiespeichereinheit einen ersten elektrischen Speicherbereich auf, der dazu ausgestaltet ist, elektrische Energie, die von dem elektrischen Verbraucher erzeugt wird, in dem ersten elektrischen Speicherbereich zu speichern und dem elektrischen Verbraucher elektrische Energie aus dem ersten elektrischen Speicherbereich, insbesondere bei einem erhöhten Energiebedarf des Verbrauchers, zur Verfügung zu stellen. Die in dem ersten elektrischen Speicherbereich speicherbare Energie des Verbrauchers kann rekuperierte Bremsenergie eines Elektromotors als Verbraucher sein. Der erste elektrische Speicherbereich kann dazu ausgestaltet sein, ausschließlich von dem Verbraucher erzeugte elektrische Energie aufzunehmen, so dass eine Überlastung des Zwischenkreises vermieden und außerdem die Stromforderungen an das Versorgungsnetz verringert werden.

Vorzugsweise weist die mindestens eine elektrische Energiespeichereinheit einen zweiten elektrischen Speicherbereich auf, der dazu ausgestaltet ist, elektrische Energie aus dem zweiten elektrischen Speicherbereich dem Verbraucher dann zur Verfügung zu stellen, wenn die Spannung des elektrischen Versorgungsnetzes kleiner ist als ein vordefinierter Ausfallparameter, insbesondere gleich 0 ist. Insbesondere ist der zweite elektrische Speicherbereich dazu ausgestaltet, nur in diesem Fall elektrische Energie dem Verbraucher zur Verfügung zu stellen. Die elektrische Energiespeichereinheit kann damit als unterbrechungsfreie Stromversorgung des Verbrauchers dienen, die auch dann den Verbraucher mit elektrischer Energie versorgt, wenn das Versorgungsnetz nicht mehr hinreichend elektrische Energie liefert oder in Gänze ausfallen sollte. Der Ausfallparameter beträgt beispielsweise einen Wert von maximal 30%, insbesondere maximal 20%, vorzugsweise maximal 10% der Versorgungsspannung. Die bereits erwähnte Bestimmung des virtuellen Effektivstromwerts kann erfolgen, wenn der Verbraucher mit elektrischer Energie aus dem ersten Energiebereich und/oder aus dem zweiten Energiebereich der mindestens einen elektrischen Energiespeichereinheit versorgt wird.

Das Versorgungsnetz und/der der Verbraucher können mit Wechselstrom betrieben sein. Beispielsweise für den Fall, dass sowohl das Versorgungsnetz als auch der Verbraucher mit Wechselstrom betrieben werden, kann der Zwischenkreis als Frequenzumrichter ausgestaltet sein oder zumindest einen Frequenzumrichter aufweisen, wobei der Frequenzumrichter einen Gleichrichter und einen mit dem Gleichrichter verbundenen Wechselrichter umfasst, wobei der Gleichrichter insbesondere als Diodengleichrichter ausgestaltet ist. Zur Glättung des Stroms im Zwischenkreis kann dieser einen Kondensator aufweisen, dem insbesondere ein Vorladewiderstand zugeordnet ist.

Die mindestens eine Energiespeichereinheit kann mindestens eine Steuereinrichtung aufweisen, die mit mindestens einem Energiespeicher und/oder mindestens einem Gleichspannungswandler verbunden ist. Die Regelvorrichtung kann zur besonders einfachen Ansteuerung der Energiespeichereinheit mit der Steuereinrichtung verbunden sein. Vorzugsweise ist jedem Energiespeicher ein Gleichspannungswandler zugeordnet, wobei die Gleichspannungswandler jeweils mit dem Zwischenkreis verbunden sein können.

Vorzugsweise ist die Regelvorrichtung als autarkes System ausgebildet, das insbesondere nicht mit elektrischer Energie unmittelbar aus dem Versorgungsnetz betrieben ist. Vorzugsweise ist die Regelvorrichtung nur mit elektrischer Energie der mindestens einen Energiespeichereinheit, insbesondere aufgrund der Verbindung der Regelvorrichtung mit dem mindestens einen Gleichspannungswandler der Energiespeichereinheit, betreibbar.

In einer Weiterbildung der Erfindung ist die Regelvorrichtung mit der mindestens einen Energiespeichereinheit als Regelsystem ausgebildet, insbesondere in integrierter Form. Sämtliche Komponenten des Regelsystems können in einem gemeinsamen Gehäuse angeordnet sein. Das Regelsystem ist insbesondere mit der Leitung zwischen dem Versorgungsnetz und dem Zwischenkreis sowie mit dem Zwischenkreis verbindbar. Weitere Vorteile und Merkmale der Erfindung ergeben sich aus den Ansprüchen und der nachfolgenden Beschreibung, in der Ausführungsbeispiele der Erfindung unter Bezugnahme auf die Zeichnungen im Einzelnen erläutert sind. Dabei zeigen:
- Fig. 1: ein Schaltbild einer Schaltanordnung mit einer Regelvorrichtung,
- Fig. 2: ein detailliertes Schaltbild der Regelvorrichtung gemäß Fig. 1,
- Fig. 3: eine schematisches Blockschaltbild zur erfindungsgemäßen Schaltanordnung,
- Fig. 4: einen beispielhaften zeitlichen Verlauf von Spannungs-, Strom- und Leistungsgrößen der Schaltanordnung gemäß Fig. 1,
- Fig. 5: den zeitlichen Verlauf gemäß Fig. 4 über einen längeren Zeitraum und
- Fig. 6: eine weitere Ausgestaltung der Schaltanordnung.

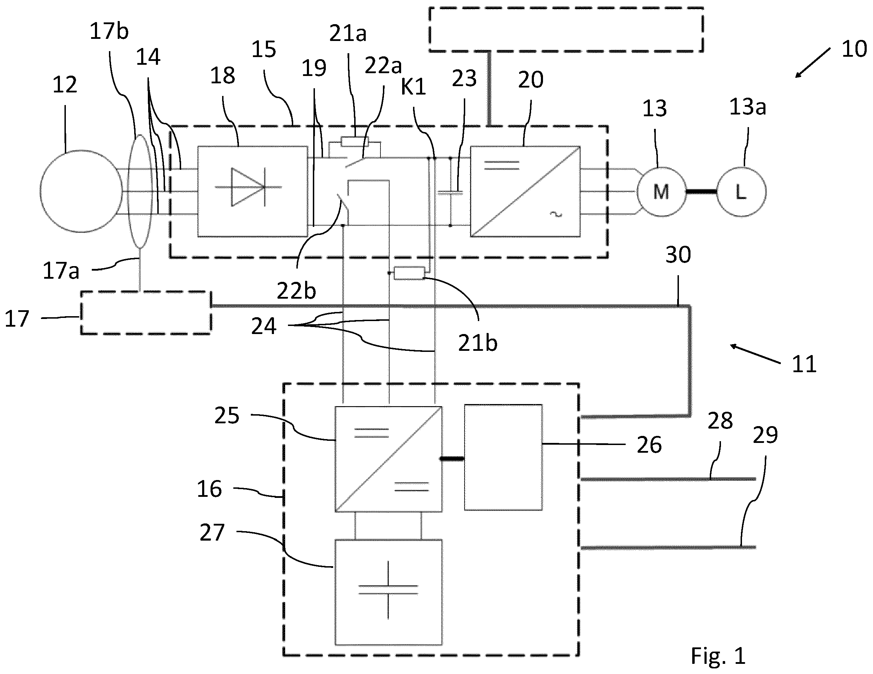

Fig. 1 zeigt eine elektrische Schaltanordnung 10 mit einer Schaltung 11, die mit einem links angeordneten Versorgungsnetz 12 und mit einem rechts angeordneten Verbraucher 13 verbunden ist. Das Versorgungsnetz 10 wird im gezeigten Ausführungsbeispiel mit dreiphasigem Wechselstrom mit einer in Europa üblichen Frequenz von 50 Hz betrieben, wobei die drei Phasen durch drei Leitungen 14 zwischen dem Versorgungsnetz 12 und der Schaltung 11 dargestellt sind. Der Verbraucher 13 ist im gezeigten Ausführungsbeispiel ein Elektromotor, der eine Last 13a antreibt, und durch die Schaltung 11 ebenfalls mit dreiphasigem Wechselstrom versorgt wird, wobei dessen Frequenz verschieden ist von der Frequenz des Versorgungsnetzes 12. Das Versorgungsnetz 12 bildet zusammen mit der Schaltung 11 und dem Verbraucher 13 die Schaltanordnung 10.

Die Schaltung 11 weist einen in Fig. 1 gestrichelt dargestellten Zwischenkreis 15, eine mit dem Zwischenkreis 15 verbundene, in Fig. 1 ebenfalls gestrichelt dargestellte elektrische Energiespeichereinheit 16 und eine ebenfalls gestrichelt dargestellte elektrische Regelvorrichtung 17 auf. Der Zwischenkreis 15 wird mit Gleichstrom betrieben und weist hierzu einen Gleichrichter 18 auf, der über die drei Leitungen 14 mit dem Versorgungsnetz 12 verbunden ist, so dass der Wechselstrom des Versorgungsnetzes 12 zu Gleichstrom gerichtet wird. Im gezeigten Ausführungsbeispiel ist der Gleichrichter 18 als Diodengleichrichter ausgestaltet. Der Diodengleichrichter 18 ist über zwei Leitungen 19 mit einem Wechselrichter 20 des Zwischenkreises 15 verbunden, der den Gleichstrom des Zwischenkreises 15 zu Wechselstrom richtet und diesen dem Elektromotor 13 zur Verfügung stellt. Die durch den Wechselrichter 20 erzeugte Wechselspannung ist dem Arbeitspunkt des Elektromotors 13 angepasst. Insofern ist der Zwischenkreis 15 funktional als Frequenzumrichter 15 ausgebildet, wobei der Wechselrichter 20 dessen Endstufe darstellt. Zwischen dem Gleichrichter 18 und dem Wechselrichter 20 sind zwei Widerstände 21a, 21b, zwei Schalter 22a, 22b und ein Kondensator 23 angeordnet. Der erste Widerstand 21a ist parallel zum ersten Schalter 22a angeordnet und als Vorladewiderstand dem Kondensator 23 zugeordnet, der zum Glätten der im Zwischenkreis 15 anliegenden (Gleich-)Spannung dient. Über den zweiten Widerstand 21b kann zur Vermeidung einer Überlastung des Zwischenkreises 15 überschüssige elektrische Energie in Wärme umgewandelt werden, wobei es durch Bestätigung des zweiten Schalters 22b auch möglich ist, diese Energie der elektrischen Energiespeichereinheit 16 zuzuführen.

Der Zwischenkreis 15 ist über drei elektrische Leitungen 24 mit der in Fig. 1 unterhalb des Zwischenkreises 15 angeordneten Energiespeichereinheit 16 der Schaltung 11 verbunden. Die Energiespeichereinheit 16 weist im gezeigten Ausführungsbeispiel einen Gleichspannungswandler 25 auf, der mit einer Steuereinrichtung 26 und mit einem Energiespeicher 27 verbunden ist, wobei der Energiespeicher 27 als Kondensator ausgestaltet ist. Der Gleichspannungswandler 25 wandelt den Gleichstrom des Zwischenkreises 15 in einen dem Arbeitspunkt des Energiespeichers 27 angepassten Gleichstrom, dessen Parameter sich von jenen der Gleichspannung des Zwischenkreises 15 unterscheiden.

Mittels des Gleichspannungswandlers 25 wird der Fluss von elektrischer Energie zwischen dem Zwischenkreis 15 und dem Energiespeicher 27 gesteuert. Beispielsweise kann bei einem erhöhten Energiebedarf des Verbrauchers 13 die Steuereinrichtung 26 den Gleichspannungswandler 25 derart ansteuern, dass der Energiespeicher 27 elektrische Energie dem Zwischenkreis 15 zuführt, um den Verbraucher 13 mit elektrischer Energie zu versorgen. Bei einem vergleichsweise geringen Energiebedarf des Verbrauchers 13, oder auch während eines regenerativen Betriebs des Verbrauchers 13, kann elektrische Energie des Zwischenkreises 15 durch eine entsprechende Ansteuerung des Gleichspannungswandlers 25 dem Energiespeicher 27 zur Verfügung gestellt werden. Auf diese Weise werden Schäden im Zwischenkreis 15 infolge zu hoher Spannungen vermieden, während gleichzeitig der Energiespeicher 27 in die Lage versetzt wird, den Verbraucher 13 bei einem erhöhten Energiebedarf erneut zu unterstützen. Die Energiespeichereinheit 16 weist eine in Fig. 1 rechts angeordnete Wartungsleitung 28 zur Wartung der Energiespeichereinheit 16 vor Ort und eine unterhalb der Wartungsleitung 28 angeordnete Fernwartungsleitung 29 auf.

Die Regelvorrichtung 17 der Schaltung 11 ist über Messleitungen 17a und eine als Kreis dargestellte Strommesseinrichtung 17b mit den drei Leitungen 14 zwischen dem Versorgungsnetz 12 und dem Gleichrichter 18 des Zwischenkreises 15 verbunden, so dass die Regelvorrichtung 17 zum Optimieren des Betriebs des Zwischenkreises 15 auf der Grundlage der Stromstärken der Leitungen 14 einen Effektivstromwert Ĩ bestimmt, was weiter unten beschrieben ist. Die Regelvorrichtung 17 ist mittels einer Datenleitung 30 mit der Energiespeichereinheit 16, insbesondere mit deren Steuereinrichtung 26, derart verbunden, dass der Gleichspannungswandler 25 derart ansteuerbar ist, um dessen Parameter durch die Regelvorrichtung 17 zu verändern.

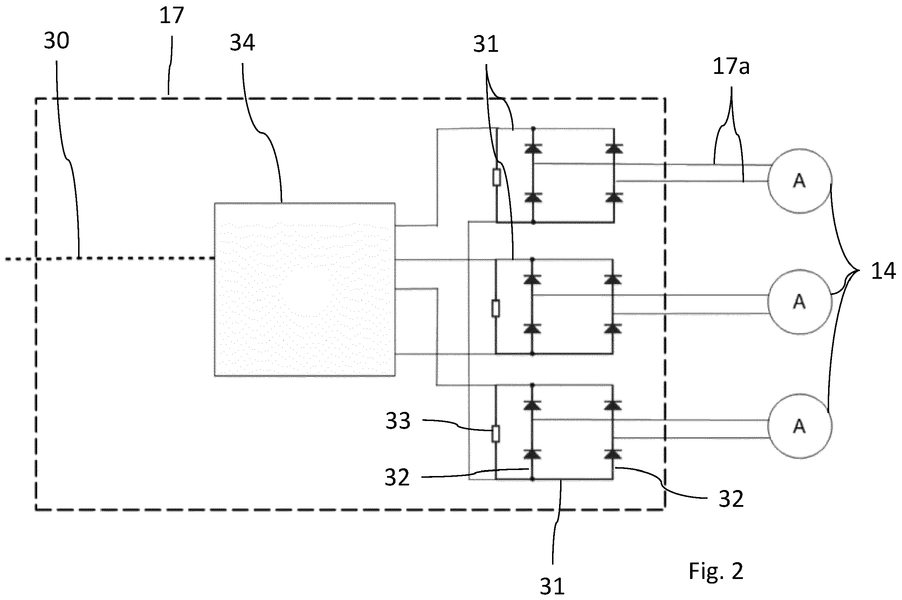

Der Aufbau der in Fig. 1 gezeigten Regelvorrichtung 17 ist beispielhaft in Fig. 2 gezeigt, wobei auf der rechten Seite die drei Leitungen 14 zwischen dem Versorgungsnetz 12 und dem Zwischenkreis 15 angeordnet sind. Jede der drei Leitungen 14 ist jeweils über zwei Messleitungen 17a mit einer Brückengleichrichterschaltung 31 zur Bestimmung der jeweils aktuellen gleichgerichteten Stromstärke verbunden, wobei jede Brückengleichrichterschaltung 31 gemäß Fig. 2 jeweils zwei jeweils zueinander parallel geschaltete Diodenpaare 32 und einen parallel zu den Diodenpaaren 32 geschalteten ohmschen Widerstand 33 aufweist. Der Übersichtlichkeit halber ist dies in Fig. 2 nur für die untere Brückengleichrichterschaltung 31 eingezeichnet. Durch die in Fig. 2 nicht dargestellte und mit den Messleitungen 17a verbundene Strommesseinrichtung 17b erfolgt eine transformatorische Reduktion der aktuellen Stromstärke der Leitungen 14 um einen vordefinierten Faktor, beispielsweise 1000. Die Brückengleichrichterschaltungen 31 richten den in den drei Leitungen 14 anliegenden Wechselstrom - transformatorisch reduziert - jeweils in einen diesem entsprechenden, zeitlich veränderlichen Gleichstrom, was mathematisch einer Betragsbildung des Wechselstroms entspricht. Brückengleichrichterschaltungen 31 werden auch als Graetzschaltungen bezeichnet. Die aktuellen, gleichgerichteten Stromstärken werden jeweils als Spannungsabfall über den ohmschen Widerstand 33 mittels einer mit den Widerständen verbundenen Verarbeitungseinheit 34 der Regelvorrichtung 17 bestimmt. Hierbei wird die Stromform mit abgebildet, was zur Bestimmung des Effektivstromwertes genutzt wird.

Aus den aktuellen, gleichgerichteten Stromstärken bestimmt die Verarbeitungseinheit 34 der Regelvorrichtung 17 den aktuellen Effektivstromwert. Danach werden Steuersignale für die in Fig. 2 gepunktet dargestellte Datenleitung 30 erzeugt, mit denen der Gleichspannungswandler 25 der Energiespeichereinheit 16 derart ansteuerbar ist, um beispielsweise bei einem erhöhten Energiebedarf des Zwischenkreises 15 diesen mit elektrischer Energie aus dem Energiespeicher 27, zumindest teilweise zu versorgen, so dass das Versorgungsnetz 12 entlastet und dessen Energiefluss zum Zwischenkreis 15 vergleichmäßigt wird. Alternativ zur Ausgestaltung gemäß Fig. 2 kann die Gleichrichtung des dreiphasigen Wechselstroms des Versorgungsnetzes 12 mit einer ungesteuerten Drehstrombrücke erfolgen (nicht dargestellt).

Die Bestimmung des Effektivstromwertes Ĩ auf der Grundlage der aktuellen Stromstärken gestaltet sich wie folgt: Im Falle einer einzigen Phase, bzw. einer einzigen (Wechsel-)Stromstärke des Versorgungsnetzes 12, ist deren zeitlicher Verlauf beispielsweise sinusförmig mit einer festen zeitlichen Periode, die in Europa üblicherweise 20 ms beträgt, was einer Frequenz von 50 Hz entspricht. Durch die Brückengleichrichterschaltung 31 gemäß Fig. 2 wird die Spannung am ohmschen Widerstand gleichgerichtet, was folglich auch für die Stromstärke gilt. Mittels der Verarbeitungseinheit 34 wird die aktuelle Stromstärke für eine zeitliche Dauer bestimmt, die der halben zeitlichen Periodendauer entspricht, hier also 10 ms. Die Bestimmung der Stromstärke erfolgt mit anderen Worten mit einer verglichen mit der Frequenz des Versorgungsnetzes 12 doppelten Frequenz von hier 100 Hz. Innerhalb dieses zeitlichen Intervalls wird der Maximalwert der Stromstärke bestimmt, der dann, aufgrund der hier beispielshaften Stromform, durch √2 dividiert wird, um den Effektivstromwert Ĩ - für diese Phase - zu erhalten, der dem weiteren Verfahren zugrunde gelegt wird. Alternativ werden die quadrierten Werte der gemessenen Stromstärken aufsummiert und anschließend die Wurzel dieser Summe bestimmt, um den Effektivstromwert Ĩ zu bestimmen, was einer Mittelwertbildung entspricht.

Im Falle eines dreiphasigen Wechselstroms des Versorgungsnetzes 12, wie dies in den Fig. 1 und 2 gezeigt ist, wird der Effektivstromwert Ĩ durch eine Clarke-Transformation bestimmt, die den drei Stromphasen des Versorgungsnetzes 12 jeweils einen zeitlich veränderlichen, mathematisch dreidimensionalen Raumvektor zuordnet. Aus diesen drei Raumvektoren wird der Effektivstromwert Ĩ bestimmt, wobei hierfür lediglich eine zeitliche Messdauer von einer Sechspulsgleichrichtungswelligkeitsfrequenz erforderlich ist, die in Europa 3,33 ms beträgt. Dadurch lässt sich eine im Vergleich zu einer einphasigen Wechselspannung schnellere Bestimmung des Effektivstromwertes Ĩ realisieren.

Der bestimmte Effektivstromwert Ĩ wird im nächsten Verfahrensschritt als Ist-Wert mit einem benutzerdefinierten Soll-Wert Iₛₒₗₗ verglichen, der dem dem Anschlusspunkt mit dem Versorgungsnetz 12 zugeordneten maximal zulässigen Effektivstrom entspricht. Der Vergleich erfolgt mittels einer Differenzbildung zwischen dem Ist-Wert und dem Soll-Wert, wobei auf der Grundlage dieser Differenz die Verarbeitungseinheit 34 ein Steuersignal bestimmt, das über die Steuerleitung 30 zum Gleichspannungswandler 25 der Energiespeichereinheit 16 gesendet wird.

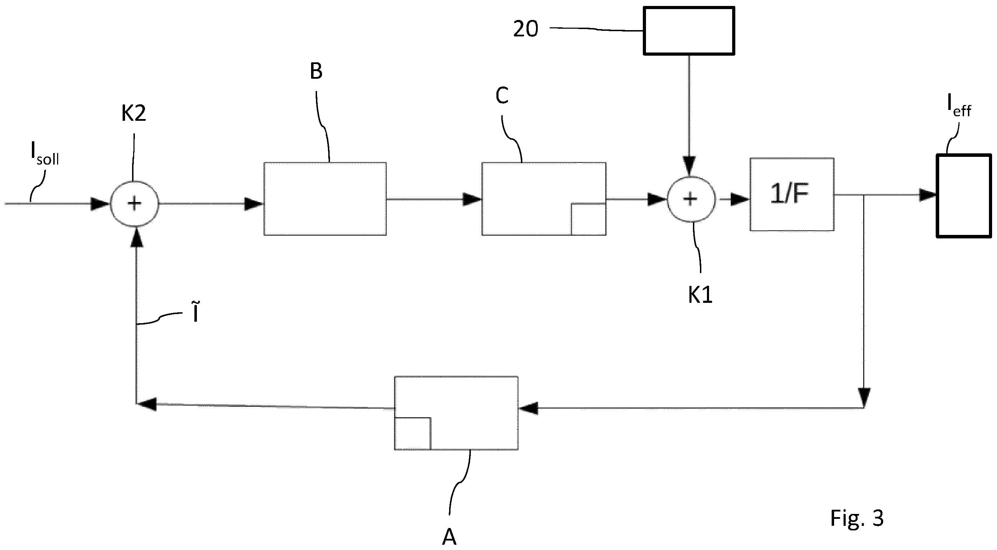

Fig. 3 veranschaulicht als Blockschaltbild die Funktionsweise der Regelvorrichtung 17. Ein in Fig. 3 rechts angeordneter Knoten K1, der auch in Fig. 1 eingezeichnet ist, veranschaulicht den Stromfluss zum Wechselrichter 20, der insofern dem Strombedarf des Verbrauchers 13 entspricht. Der Pfeil links des Knotens K1 stellt den Stromfluss zur Energiespeichereinheit 16 dar, der Pfeil rechts des Knoten K1 den (Gleich-)Stromfluss von dem Gleichrichter 18 des Zwischenkreises 15, der der Stromforderung an das Versorgungsnetz 12 entspricht, jedoch nicht gleich dieser ist. Um vom Stromfluss von dem Gleichrichter 18 auf den Stromfluss des Versorgungsnetzes 12 zu schließen, die der aktuellen Stromstärke des Versorgungsnetzes 12 entspricht, ist ein Formfaktor zu berücksichtigen, der insbesondere der Stromumformung durch den Gleichrichter 18 entspricht und mit F bezeichnet wird. Durch eine Division des Stroms des Gleichrichters 18 mit dem Formfaktor F ist damit die aktuelle, effektive Stromstärke I_{eff} des Versorgungsnetzes 12 bestimmbar. Auf der Grundlage der effektiven Stromstärke I_{eff} wird durch die Regelvorrichtung 17 wie ebenfalls bereits beschrieben der Effektivstromwert Ĩ bestimmt A, wofür im Falle von einphasigem Wechselstrom etwa 10 ms benötigt werden. Der Effektivstromwert Ĩ wird anschließend mit dem Soll-Wert Iₛₒₗₗ für die Stromstärke verglichen, was einer Differenzbildung entspricht und in dem in Fig. 3 links angeordneten Knoten K2 dargestellt ist. Aus dem Ergebnis des Vergleichs B bestimmt die Verarbeitungseinheit 34 der Regelvorrichtung 17 das Steuersignal für die Steuereinrichtung 26 der Energiespeichereinheit 16, wobei bei der Bildung des Steuersignals die unterschiedlichen Stromformen des Zwischenkreises 15 einerseits und der Energiespeichereinheit 16 andererseits durch den Formfaktor F berücksichtigt werden. Der Formfaktor F selbst ist keine Konstante sondern insbesondere von der aktuellen Belastung des Zwischenkreises 15 und weiteren Gegebenheiten wie der Kapazität des Zwischenkreises 15 und der Induktivität des Versorgungsnetzes 12 abhängig.

Die Verarbeitungseinheit 34 sendet das Steuersignal über die Datenleitung 30 an die Steuereinrichtung 26 der Energiespeichereinheit 16, die auf der Grundlage des Steuersignals mittels einer Ansteuerung des Gleichspannungswandlers 25 die Leistungsgrenzen des Energiespeichers 27 derart verändert, dass gegebenenfalls vom Zwischenkreis 15 benötigte elektrische Energie aus dem Energiespeicher 27 dem Zwischenkreis 15 zur Verfügung gestellt wird, was durch den rechten Pfeil des Knotens K1 dargestellt ist. Die Bildung des Steuersignals, die Ansteuerung der Steuereinrichtung 26 und die Verarbeitung des Steuersignals erfolgen innerhalb einer gewissen zeitlichen Verzögerung, die im gezeigten Ausführungsbeispiel etwa 5 ms beträgt. Für diese Zeitdauer erfolgt keine weitere Auswertung des Effektivstromwertes Ĩ, um unerwünschte Rückkopplungseffekte zu vermeiden. Durch eine benutzerdefinierte zeitliche Verzögerung vor einem erneuten Durchlauf des Verfahrens wird sichergestellt, dass eine gegebenenfalls benötigte Stromforderung bereits von dem Energiespeicher 27 erfüllt wurde, bevor abermals der Effektivstromwert Ĩ genutzt wird und ein erneuter Regelungsvorgang erfolgt.

Im Gleichspannungswandler 25 der Energiespeichereinheit 16 ist neben den Parametern für die maximale Speicherspannung des Energiespeicher 27 und dessen minimale Speicherspannung auch der - hier veränderliche - Parameter der Trennspannung gespeichert. Die maximale Speicherspannung entspricht der maximal zulässigen Spannung, die der Energiespeicher 27 aufweisen kann und darf nicht überschritten werden. Die minimale Speicherspannung entspricht der minimal zulässigen Spannung, die der Energiespeicher 27 aufweisen kann und nicht unterschritten werden darf. Die Trennspannung beeinflusst das Lade- bzw. Entladeverhalten des Energiespeichers 27: Liegt die tatsächliche Spannung am Energiespeicher 27 oberhalb der Trennspannung, wird der Energiespeicher 27 entladen und stellt elektrische Energie über den Gleichspannungswandler 25 dem Zwischenkreis 15 zur Verfügung. Liegt die tatsächliche Spannung am Energiespeicher 27 unterhalb der Trennspannung, wird der Energiespeicher 27 mit elektrischer Energie aus dem Zwischenkreis 15 aufgeladen. Durch den Wert der Trennspannung wird daher die Richtung des Stroms zwischen dem Energiespeicher und dem Zwischenkreis bestimmt.

Für den Fall, dass ein insbesondere kurzfristig erhöhter Energiebedarf des Zwischenkreises 15 vorliegt, unterschreitet der durch die Verarbeitungseinheit 34 der Regelvorrichtung 17 bestimmte Effektivstromwert Ĩ als Istwert den benutzerdefiniert vorgegebenen Sollwert Iₛₒₗₗ. Das demgemäß bestimmte Steuersignal entspricht in diesem Fall einer Stromforderung an den Energiespeicher 27. Das an die Steuereinrichtung 26 der Energiespeichereinheit 16 übermittelte Steuersignal führt in diesem Fall dazu, dass die Trennspannung des Gleichspannungswandlers 25 beispielsweise auf die minimale Speicherspannung abgesenkt wird, so dass der Energiespeicher 27 über den Gleichspannungswandler 25 elektrische Energie dem Zwischenkreis 15 zur Verfügung stellt. Dadurch wird vermieden, dass ein kurzfristig erhöhter Strombedarf des Zwischenkreises 15 zu einem übermäßig erhöhten Stromfluss aus dem Versorgungsnetz 12 führt und eine in Fig. 1 nicht gezeigte Sicherung der Schaltanordnung überlastet. Vielmehr wird der erhöhte Strombedarf, zumindest teilweise, durch elektrische Energie aus dem Energiespeicher 27 gedeckt, so dass die dem Versorgungsnetz 12 entnommene elektrische Energie aufgrund der Regelvorrichtung 17 vergleichmäßigt wird. Dadurch wird der Betrieb des Zwischenkreises 15 optimiert. Die Entladung des Energiespeichers 27 erfolgt dabei solange, bis sich der Strombedarf des Zwischenkreises 15 normalisiert hat und/oder bis der Energiespeicher 27 hinreichend entladen ist. Der Ladezustand des Energiespeichers 27 wird kontinuierlich überwacht, so dass ein Warnsignal ausgegeben wird, falls der Ladezustand des Energiespeichers 27 einen benutzerdefinierten Wert unterschreitet.

Bei einem nachfolgend wieder normalisierten Strombedarf des Zwischenkreises 15 kann überschüssige Energie dazu verwendet werden, den Energiespeicher 27 wieder aufzuladen. Dies erfolgt analog zu dem vorstehend beschrieben Verfahren, wobei insbesondere auf der Grundlage des Vergleichs des Effektivstromwertes Ĩ mit dem Sollwert Iₛₒₗₗ ein entsprechendes Steuersignal an die Steuereinrichtung 26 der Energiespeichereinheit 16 gesendet wird, was dazu führt, dass elektrische Energie aus dem Zwischenkreis 15 über den Gleichspannungswandler 25 zum Energiespeicher 27 fließt, um diesen aufzuladen, was einer Umkehrung der dargestellten Stromrichtungen entspricht.

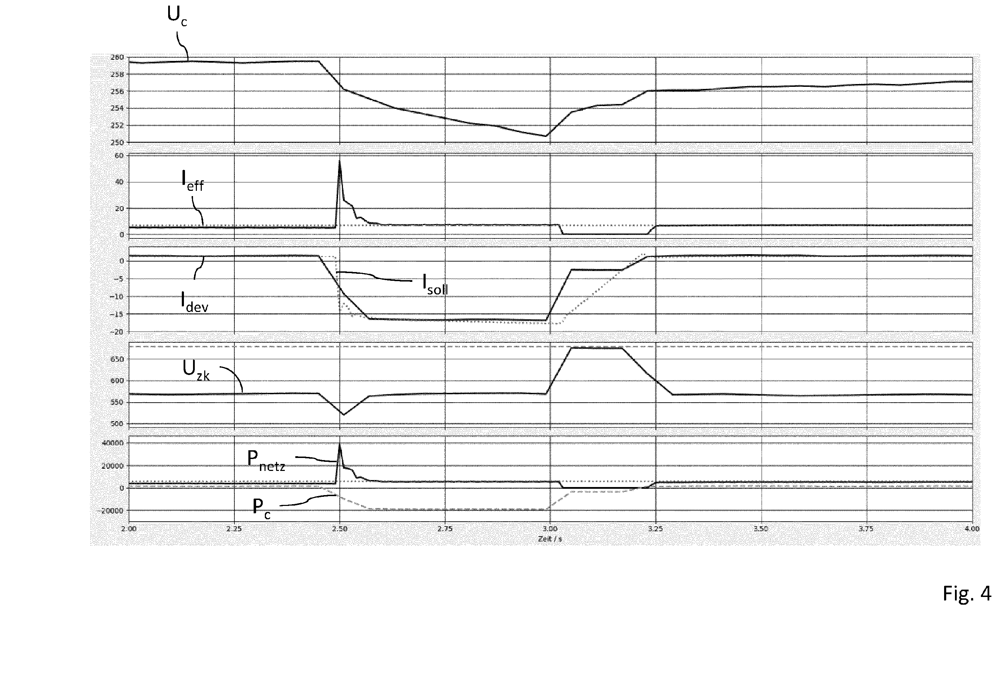

Fig. 4 zeigt den zeitlichen Verlauf der für die Schaltanordnung 10 maßgeblichen Spannungs-, Strom- und Leistungsgrößen in x-t-Diagrammen. Im oberen Diagramm ist die Spannung U_{c} des Energiespeichers 27 dargestellt, darunter die effektive Stromstärke I_{eff} des Versorgungsnetzes 12, wobei der durch die nicht dargestellte Sicherung gesetzte Grenzwert punktiert eingezeichnet ist. Darunter ist die Stromstärke I_{dev} zwischen dem Zwischenkreis 13 und dem Energiespeicher 27 dargestellt, wobei der Sollwert Iₛₒₗₗ punktiert eingezeichnet ist. Darunter ist der zeitliche Verlauf der Spannung U_{zk} des Zwischenkreises dargestellt, wobei die Überladungsspannung gestrichelt und die Ausfallspannung punktiert eingezeichnet ist. Schließlich ist in Fig. 4 unten der zeitliche Verlauf der Netzleistung P_{netz} dargestellt, wobei die durch die nicht dargestellte Sicherung bedingte maximale Netzleistung punktiert und die Leistung P_{c} des Energiespeichers 27 gestrichelt eingezeichnet sind. Ab ca. 2,5 s ist ein schlagartig erhöhter Peak der effektiven Netzstromstärke I_{eff} ersichtlich, der einer ebenfalls schlagartig erhöhten Netzleistung P_{netz} entspricht. Durch die Regelvorrichtung 17 wird der erhöhte Energiebedarf des Verbrauchers 13 erkannt, so dass, bedingt durch das entsprechende Steuersignal, ein negativer Stromfluss I_{dev} ausgelöst wird, wodurch der Energiespeicher 27 den Zwischenkreis 15 mit elektrischer Energie unterstützt. Dadurch sinkt die Speicherspannung U_{c}. Bedingt durch die von dem Energiespeicher 27 zur Verfügung gestellte Energie sinkt der Netzstrom I_{eff} wieder, bis letzterer wieder den Sollwert Iₛₒₗₗ erreicht.

Ab ca. 3 s sinkt schlagartig der Leistungsbedarf des Verbrauchers 13, was sich durch einen Abfall der Netzstromstärke I_{eff} und der Netzleistung P_{netz} äußert, wobei nur ein Teil der vom Energiespeicher 27 zur Verfügung gestellten Energie vom Verbraucher 13 verwendet wird. Für eine kurze Zeit hat die Regelvorrichtung 17 dies noch nicht erfasst und liefert weiter Strom aus dem Energiespeicher 27 an den Zwischenkreis 13 mit der Folge, dass die Stromstärke I_{dev} und die Spannung U_{dev} des Zwischenkreises 15 ansteigen. Dies erfolgt solange, bis die Spannung U_{gev} des Zwischenkreises 15 die Überladungsspannung erreicht. Nachdem die Regelvorrichtung 17 dies erkannt hat, wird ein weiteres Entladen des Energiespeichers 27 unterbunden und die Zwischenkreisspannung U_{zx} steigt nicht mehr weiter an. Anschließend erkennt die Regelvorrichtung 17 bei ca. 3,25 s, dass die effektive Stromstärke I_{eff} geringer ist als der Sollwert Iₛₒₗₗ und bewirkt ein Aufladen des Energiespeichers 27 in der vorstehend bereits beschriebenen Weise.

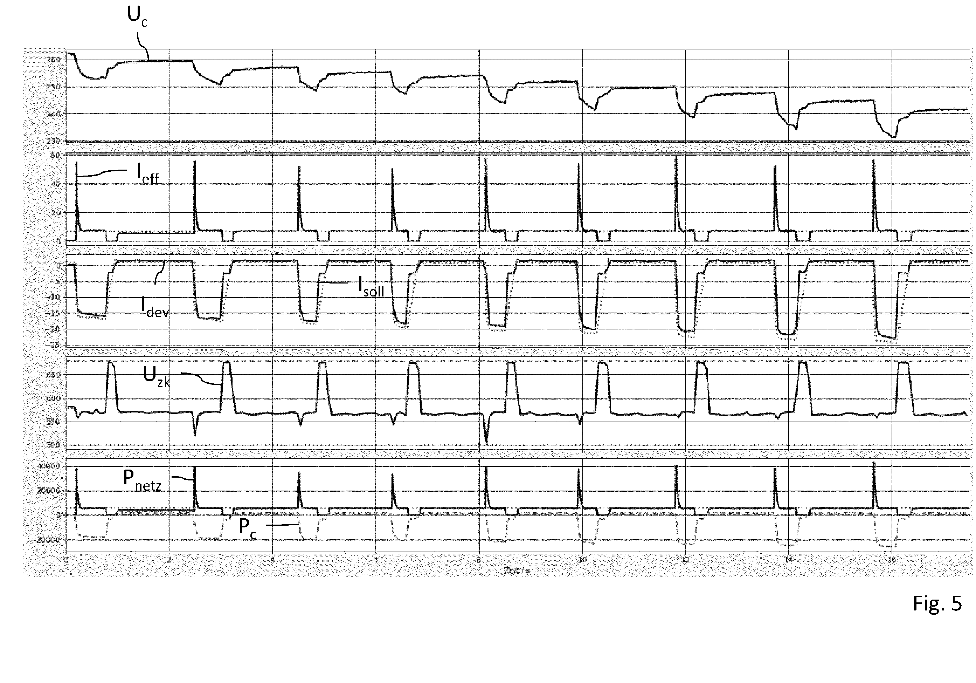

Fig. 5 zeigt den zeitlichen Verlauf der bereits in Fig. 4 gezeigten Größen über einen längeren Zeitraum für zyklisch wiederholte Belastungsfälle, wobei ersichtlich ist, dass der nächste Belastungsfall bereits erfolgt, bevor der Energiespeicher 27 wieder vollständig aufgeladen wurde. Dies führt zu einer im zeitlichen Mittel kontinuierlichen Abnahme der Spannung des Energiespeichers 27, was durch die Regelvorrichtung 17 überwacht und im vorliegenden Beispiel erkannt wird, so dass rechtzeitig ein Signal und eine Warnmeldung ausgegeben werden, um den Benutzer auf die drohende Entladung des Energiespeichers 27 aufmerksam zu machen.

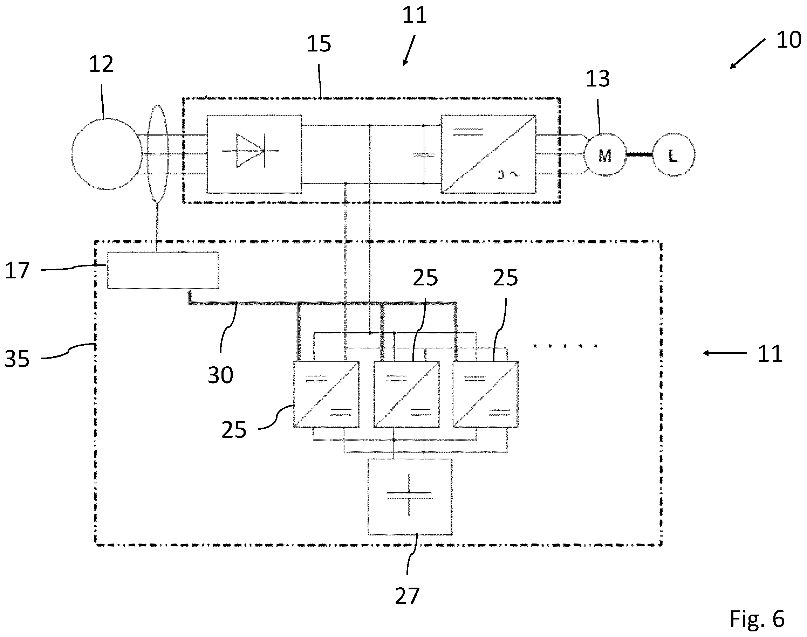

Fig. 6 zeigt eine weitere Ausgestaltung der Schaltanordnung 10 mit einer Regelvorrichtung 17, die mit der Energiespeichereinheit 16 verbunden ist, wobei die Energiespeichereinheit 16 einen Kondensator 27 als Energiespeicher und drei Gleichspannungswandler 25 aufweist, die sämtlich mit dem Energiespeicher 27 einerseits und mit dem Zwischenkreis 15 andererseits verbunden sind. Die Regelvorrichtung 17 ist über die Datenleitung 30 mit sämtlichen Gleichspannungswandlern 25 derart verbunden, dass für jeden Gleichspannungswandler 25 ein separates Steuersignal bestimmt und an diesen übermittelt wird. Jeder Gleichspannungswandler 25 weist dabei eine integrierte Steuereinrichtung auf, die in Fig. 6 nicht gezeigt sind. Bei der Bestimmung des Steuersignals wird die Anzahl der mit der Regelvorrichtung 17 verbundenen Gleichspannungswandlern 25 berücksichtigt, so dass eine optimale Ansteuerung des Energiespeichers 27 erfolgen kann, insbesondere um den Zwischenkreis 15 bei einem erhöhten Energiebedarf mit elektrischer Energie aus dem Energiespeicher 27 zu unterstützen. Durch die Ausbildung mehrerer Gleichspannungswandler 25 ist sichergestellt, dass auch dann, wenn der erhöhte Energiebedarf des Zwischenkreises 15 zu einem Überschreiten der fest vorgegebenen Stromgrenze eines einzigen Gleichspannungswandlers 25 führen würde, die erforderliche Energie verteilt über die Gleichspannungswandler 25 derart abgegeben wird, dass die Stromgrenzen der Gleichspannungswandler 25 eingehalten werden. Im Ausführungsbeispiel der Fig. 6 ist die Regelvorrichtung 17 mit der Energiespeichereinheit 16 als Regelsystem 35 ausgebildet, das mit dem Versorgungsnetz 12 und dem Zwischenkreis 15 verbunden ist.

## Patentansprüche

1. Elektrische Schaltung (11) mit einem Zwischenkreis (15), der mit einem elektrischen Versorgungsnetz (12) und mit einem elektrischen Verbraucher (13) verbindbar ist, und der mindestens eine elektrische Energiespeichereinheit (16) aufweist, wobei
die Schaltung (11) eine elektrische Regelvorrichtung (17) zum Optimieren des Betriebs des Zwischenkreises (15) aufweist, wobei die Regelvorrichtung (17) mit mindestens einer Leitung (14) zwischen dem Versorgungsnetz (12) und dem Zwischenkreis (15) einerseits und mit der mindestens einen elektrischen Energiespeichereinheit (16) andererseits verbindbar ist, wobei die Regelvorrichtung (17) dazu ausgestaltet ist, den Energiefluss zwischen dem Zwischenkreis (15) und der mindestens einen elektrischen Energiespeichereinheit (16) in Abhängigkeit von einem Effektivstromwert (Ĩ) zwischen dem Versorgungsnetz (12) und dem Zwischenkreis (15) zu regeln, wobei die Regelvorrichtung (17) insbesondere mit der Leitung (14) und mit der Energiespeichereinheit (16) verbunden ist.

2. Schaltung nach Anspruch 1, **dadurch gekennzeichnet, dass** die Regelvorrichtung (17) dazu ausgestaltet ist, den Effektivstromwert (Ĩ) in Abhängigkeit von der Stromstärke zwischen dem Versorgungsnetz (12) und dem Zwischenkreis (15) zu bestimmen, insbesondere auf der Grundlage einer Messung der Stromstärke für eine vordefinierte zeitliche Dauer, die insbesondere der Hälfte der zeitlichen Periode der Wechselspannung des Versorgungsnetzes (12) entspricht, und/oder dass die Regelvorrichtung (17) dazu ausgestaltet ist, dass der Effektivstromwert (Ĩ) auf der Grundlage von mindestens zwei Phasen, insbesondere Stromphasen des Versorgungsnetzes (12), insbesondere auf der Grundlage von zwei, drei oder sämtlichen Phasen des Versorgungsnetzes (12) bestimmt wird, und/oder dass die Regelvorrichtung (17) dazu ausgestaltet ist, dass zur Bestimmung des Effektivstromwertes (Ĩ) die Stromstärke von mindestens einer Phase des Stroms des Versorgungsnetzes (12) rechnerisch bestimmt wird.

3. Schaltung nach einem der Ansprüche 1 oder 2, **dadurch gekennzeichnet, dass** die Regelvorrichtung (17) dazu ausgestaltet ist, dass bei der Bestimmung des Effektivstromwertes (Ĩ) die Stromformen des Zwischenkreises (15) und/oder der mindestens einen Energiespeichereinheit (16) und/oder des Versorgungsnetzes (12) berücksichtigt werden, und/oder dass die Regelvorrichtung (17) dazu ausgestaltet ist, dass der Effektivstromwert (Ĩ) mit einem benutzerdefinierten Sollwert (Iₛₒₗₗ) verglichen wird und in Abhängigkeit dieses Vergleichs insbesondere eine Entladung der Energiespeichereinheit (16) oder eine Aufladung der Energiespeichereinheit (16) erfolgt.

4. Schaltung nach einem der Ansprüche 1 bis 3, **dadurch gekennzeichnet, dass** die Regelvorrichtung (17) dazu ausgestaltet ist, dass auf der Grundlage des Effektivstromwertes (Ĩ), insbesondere auf der Grundlage des Vergleichs, ein Steuersignal bestimmt wird, das anschließend an die mindestens eine Energiespeichereinheit (16), insbesondere an eine Steuereinrichtung (26) der Energiespeichereinheit (16), übermittelt wird, wobei insbesondere vorgesehen ist, dass die Regelvorrichtung (17) dazu ausgestaltet ist, dass bei der Bestimmung des Steuersignals die Anzahl der Energiespeichereinheiten (16) und/oder die Anzahl der Gleichspannungswandler (25) der Energiespeichereinheiten (16) berücksichtigt werden.

5. Schaltung nach Anspruch 4, **dadurch gekennzeichnet, dass** die Regelvorrichtung (17) dazu ausgestaltet ist, dass das Steuersignal eine Änderung eines Parameters der Energiespeichereinheit (16) bewirkt, wobei der Parameter insbesondere ein Spannungsparameter ist und das Lade- und Entladeverhalten der Energiespeichereinheit (16) bestimmt.

6. Schaltung nach einem der Ansprüche 1 bis 5, **dadurch gekennzeichnet, dass** die Regelvorrichtung (17) dazu ausgestaltet ist, dass die Regelung des Energieflusses zwischen der mindestens einen Energiespeichereinheit (16) und dem Zwischenkreis (15) derart erfolgt, dass ein benutzerdefinierter Wert für die Stromstärke zwischen dem Zwischenkreis (15) und dem Versorgungsnetz (13), insbesondere für ein benutzerdefiniertes Zeitintervall, nicht überschritten wird, und/oder dass die Regelvorrichtung (17) dazu ausgestaltet ist, dass nach Übermittlung des Steuersignals an die mindestens eine Energiespeichereinheit (16) eine erneute Regelung erst nach einer benutzerdefinierten Zeitdauer beginnt, und/oder dass die Regelvorrichtung (17) über mindestens eine Messleitung (17a) mit der mindestens einen Leitung (14) zwischen dem Versorgungsnetz (12) und dem Zwischenkreis (15) und/oder über mindestens eine Datenleitung (30) mit der mindestens einen elektrischen Energiespeichereinheit (16) verbunden ist.

7. Schaltung nach einem der Ansprüche 1 bis 6, **dadurch gekennzeichnet, dass** die Regelvorrichtung (7) dazu ausgebildet ist, dass bei einem Energiefluss von der mindestens einen elektrischen Energiespeichereinheit (16) zu dem Zwischenkreis (15) ein virtueller Effektivstromwert bestimmt wird, der dem Energiefluss von der mindestens einen elektrischen Energiespeichereinheit (16) zu dem Zwischenkreis (15) entspricht, und dass der Energiefluss zwischen dem Zwischenkreis (15) und der mindestens einen elektrischen Energiespeichereinheit (16) in Abhängigkeit von dem virtuellen Effektivstromwert geregelt wird, falls der virtuelle Effektivstromwert einen Schwellenwert übersteigt.

8. Schaltung nach einem der Ansprüche 1 bis 7, **dadurch gekennzeichnet, dass** die Regelvorrichtung (17) mit mindestens einer Steuereinrichtung (26) der mindestens einen Energiespeichereinheit (16) und/oder mit mindestens einem Gleichspannungswandler (25) der mindestens einen Energiespeichereinheit (16) verbindbar ist, und/oder dass die Regelvorrichtung (17) mit der Leitung (14) und/oder mit der Energiespeichereinheit (16) lösbar verbindbar und/oder nachrüstbar ist, und/oder dass die Regelvorrichtung (17) mindestens eine Verarbeitungseinheit (34) zum Generieren eines Steuersignals und/oder mindestens eine, insbesondere mindestens zwei mit der Verarbeitungseinheit (34) verbundene Gleichrichterschaltungen (31) aufweist.

9. Schaltung nach einem der Ansprüche 1 bis 8, **dadurch gekennzeichnet, dass** der Zwischenkreis (15) und/oder die mindestens eine elektrische Energiespeichereinheit (16) mit Gleichspannung betrieben sind, und/oder dass der Zwischenkreis (15) einen Frequenzumrichter (15), insbesondere einen Diodengleichrichter, aufweist.

10. Schaltung nach einem der Ansprüche 1 bis 9, **dadurch gekennzeichnet, dass** die mindestens eine Energiespeichereinheit (16) mindestens eine Steuereinrichtung (26), mindestens einen Energiespeicher (27) und/oder mindestens einen Gleichspannungswandler (25) aufweist.

11. Schaltung nach einem der Ansprüche 1 bis 10, **dadurch gekennzeichnet, dass** die mindestens eine elektrische Energiespeichereinheit (16) einen ersten elektrischen Speicherbereich aufweist, der dazu ausgestaltet ist, elektrische Energie, die von dem elektrischen Verbraucher (13) erzeugt wird, in dem ersten elektrischen Speicherbereich zu speichern und dem elektrischen Verbraucher (13) elektrische Energie aus dem ersten elektrischen Speicherbereich, insbesondere bei einem erhöhten Energiebedarf des Verbrauchers (13), zur Verfügung zu stellen.

12. Schaltung nach einem der Ansprüche 1 bis 11, **dadurch gekennzeichnet, dass** die mindestens eine elektrische Energiespeichereinheit (16) einen zweiten elektrischen Speicherbereich aufweist, der dazu ausgestaltet ist, elektrische Energie aus dem zweiten elektrischen Speicherbereich dem Verbraucher (13) dann zur Verfügung zu stellen, wenn die Spannung des elektrischen Versorgungsnetzes (12) kleiner ist als ein vordefinierter Ausfallparameter.

13. Elektrische Schaltanordnung (10) mit einer Schaltung (11) nach einem der Ansprüche 1 bis 12, wobei die Schaltung (11) mit dem elektrischen Versorgungsnetz (12) und mit dem elektrischen Verbraucher (13) verbunden ist.

## Claims

1. Electrical circuit (11) having an intermediate circuit (15) connectable to an electrical supply network (12) and to an electrical load (13), and which has at least one electrical energy storage unit (16), wherein the circuit (11) has an electrical control device (17) for optimizing the operation of the intermediate circuit (15), wherein the control device (17) is connectable, on the one hand, to at least one line (14) between the supply network (12) and the intermediate circuit (15) and, on the other hand, to the at least one electrical energy storage unit (16), wherein the control device (17) is configured to control the energy flow between the intermediate circuit (15) and the at least one electrical energy storage unit (16) as a function of an RMS current value (Ĩ) between the supply network (12) and the intermediate circuit (15), wherein the control device (17) is, in particular, connected to the line (14) and to the energy storage unit (16).

2. Circuit according to claim 1, **characterized in that** the control device (17) is configured to determine the RMS current value (Ĩ) as a function of the current between the supply network (12) and the intermediate circuit (15), in particular on the basis of a measurement of the current for a predefined time duration which, in particular, corresponds to half the time period of the alternating voltage of the supply network (12), and/or **in that** the control device (17) is configured such that the RMS current value (Ĩ) is determined on the basis of at least two phases, in particular current phases, of the supply network (12), in particular on the basis of two, three or all phases of the supply network (12), and/or **in that** the control device (17) is configured such that, for determining the RMS current value (Ĩ), the current of at least one phase of the current of the supply network (12) is computationally determined.

3. Circuit according to either claim 1 or claim 2, **characterized in that** the control device (17) is configured such that, when determining the RMS current value (Ĩ), the current waveforms of the intermediate circuit (15) and/or of the at least one energy storage unit (16) and/or of the supply network (12) are taken into account, and/or **in that** the control device (17) is configured such that the RMS current value (Ĩ) is compared with a user-defined setpoint value (Isoll) and, depending on this comparison, in particular a discharging of the energy storage unit (16) or a charging of the energy storage unit (16) is effected.

4. Circuit according to any one of claims 1 to 3, **characterized in that** the control device (17) is configured such that, on the basis of the RMS current value (Ĩ), in particular on the basis of the comparison, a control signal is determined which is subsequently transmitted to the at least one energy storage unit (16), in particular to a control unit (26) of the energy storage unit (16), wherein, in particular, provision is made for the control device (17) to be configured such that, when determining the control signal, the number of energy storage units (16) and/or the number of DC voltage converters (25) of the energy storage units (16) are taken into account.

5. Circuit according to claim 4, **characterized in that** the control device (17) is configured such that the control signal effects a change of a parameter of the energy storage unit (16), wherein the parameter is, in particular, a voltage parameter and determines the charging and discharging behavior of the energy storage unit (16).

6. Circuit according to any one of claims 1 to 5, **characterized in that** the control device (17) is configured such that the control of the energy flow between the at least one energy storage unit (16) and the intermediate circuit (15) is effected such that a user-defined value for the current between the intermediate circuit (15) and the supply network (13), in particular for a user-defined time interval, is not exceeded, and/or **in that** the control device (17) is configured such that, after transmission of the control signal to the at least one energy storage unit (16), a renewed control operation begins only after a user-defined time period, and/or **in that** the control device (17) is connected via at least one measuring line (17a) to the at least one line (14) between the supply network (12) and the intermediate circuit (15) and/or via at least one data line (30) to the at least one electrical energy storage unit (16).

7. Circuit according to any one of claims 1 to 6, **characterized in that** the control device (7) is configured such that, in the case of an energy flow from the at least one electrical energy storage unit (16) to the intermediate circuit (15), a virtual RMS current value is determined which corresponds to the energy flow from the at least one electrical energy storage unit (16) to the intermediate circuit (15), and **in that** the energy flow between the intermediate circuit (15) and the at least one electrical energy storage unit (16) is controlled as a function of the virtual RMS current value if the virtual RMS current value exceeds a threshold value.

8. Circuit according to any one of claims 1 to 7, **characterized in that** the control device (17) is connectable to at least one control unit (26) of the at least one energy storage unit (16) and/or to at least one DC voltage converter (25) of the at least one energy storage unit (16), and/or **in that** the control device (17) is releasably connectable to the line (14) and/or to the energy storage unit (16) and/or is retrofittable, and/or **in that** the control device (17) has at least one processing unit (34) for generating a control signal and/or at least one, in particular at least two, rectifier circuits (31) connected to the processing unit (34).

9. Circuit according to any one of claims 1 to 8, **characterized in that** the intermediate circuit (15) and/or the at least one electrical energy storage unit (16) are operated with DC voltage, and/or **in that** the intermediate circuit (15) has a frequency converter (15), in particular a diode rectifier.

10. Circuit according to any one of claims 1 to 9, **characterized in that** the at least one energy storage unit (16) has at least one control unit (26), at least one energy store (27) and/or at least one DC voltage converter (25).

11. Circuit according to any one of claims 1 to 10, **characterized in that** the at least one electrical energy storage unit (16) has a first electrical storage region which is configured to store, in the first electrical storage region, electrical energy generated by the electrical load (13), and to make electrical energy from the first electrical storage region available to the electrical load (13), in particular in the case of an increased energy demand of the load (13).

12. Circuit according to any one of claims 1 to 11, **characterized in that** the at least one electrical energy storage unit (16) has a second electrical storage region which is configured to make electrical energy from the second electrical storage region available to the load (13) when the voltage of the electrical supply network (12) is lower than a predefined failure parameter.

13. Electrical circuit arrangement (10) having a circuit (11) according to any one of claims 1 to 12, wherein the circuit (11) is connected to the electrical supply network (12) and to the electrical load (13).

## Revendications

1. Circuit électrique (11) comportant un circuit intermédiaire (15) qui peut être relié à un réseau d'alimentation électrique (12) et à un consommateur électrique (13), et qui comporte au moins une unité de stockage d'énergie électrique (16), le circuit (11) comportant un dispositif de régulation électrique (17) destiné à optimiser le fonctionnement du circuit intermédiaire (15), le dispositif de régulation (17) pouvant être relié, d'une part, à au moins une ligne (14) entre le réseau d'alimentation (12) et le circuit intermédiaire (15) et, d'autre part, à l'au moins une unité de stockage d'énergie électrique (16), le dispositif de régulation (17) étant configuré pour réguler le flux d'énergie entre le circuit intermédiaire (15) et l'au moins une unité de stockage d'énergie électrique (16) en fonction d'une valeur efficace de courant (Ĩ) entre le réseau d'alimentation (12) et le circuit intermédiaire (15), le dispositif de régulation (17) étant en particulier relié à la ligne (14) et à l'unité de stockage d'énergie (16).

2. Circuit selon la revendication 1, **caractérisé en ce que** le dispositif de régulation (17) est configuré pour déterminer la valeur efficace de courant (Ĩ) en fonction de l'intensité du courant entre le réseau d'alimentation (12) et le circuit intermédiaire (15), en particulier sur la base d'une mesure de l'intensité du courant pendant une durée prédéfinie qui correspond en particulier à la moitié de la période de la tension alternative du réseau d'alimentation (12), et/ou **en ce que** le dispositif de régulation (17) est configuré de telle sorte que la valeur efficace de courant (Ĩ) est déterminée sur la base d'au moins deux phases, en particulier de phases de courant, du réseau d'alimentation (12), en particulier sur la base de deux, de trois ou de toutes les phases du réseau d'alimentation (12), et/ou **en ce que** le dispositif de régulation (17) est configuré de telle sorte que, pour déterminer la valeur efficace de courant (Ĩ), l'intensité du courant d'au moins une phase du courant du réseau d'alimentation (12) est déterminée par calcul.

3. Circuit selon l'une des revendications 1 ou 2, **caractérisé en ce que** le dispositif de régulation (17) est configuré de telle sorte que, lors de la détermination de la valeur efficace de courant (Ĩ), les formes d'onde du courant du circuit intermédiaire (15) et/ou de l'au moins une unité de stockage d'énergie (16) et/ou du réseau d'alimentation (12) sont prises en compte, et/ou **en ce que** le dispositif de régulation (17) est configuré de telle sorte que la valeur efficace de courant (Ĩ) est comparée à une valeur de consigne (Isoll) définie par l'utilisateur et qu'en fonction de ce.e comparaison, il se produit en particulier une décharge de l'unité de stockage d'énergie (16) ou une charge de l'unité de stockage d'énergie (16).

4. Circuit selon l'une des revendications 1 à 3, **caractérisé en ce que** le dispositif de régulation (17) est configuré de telle sorte que, sur la base de la valeur efficace de courant (Ĩ), en particulier sur la base de la comparaison, un signal de commande est déterminé, lequel est ensuite transmis à l'au moins une unité de stockage d'énergie (16), en particulier à une unité de commande (26) de l'unité de stockage d'énergie (16), où il est en particulier prévu que le dispositif de régulation (17) soit configuré de telle sorte que, lors de la détermination du signal de commande, le nombre d'unités de stockage d'énergie (16) et/ou le nombre de convertisseurs de tension continue (25) des unités de stockage d'énergie (16) soient pris en compte.

5. Circuit selon la revendication 4, **caractérisé en ce que** le dispositif de régulation (17) est configuré de telle sorte que le signal de commande provoque une modification d'un paramètre de l'unité de stockage d'énergie (16), le paramètre étant en particulier un paramètre de tension et déterminant le comportement de charge et de décharge de l'unité de stockage d'énergie (16).

6. Circuit selon l'une des revendications 1 à 5, **caractérisé en ce que** le dispositif de régulation (17) est configuré de telle sorte que la régulation du flux d'énergie entre l'au moins une unité de stockage d'énergie (16) et le circuit intermédiaire (15) s'effectue de sorte qu'une valeur définie par l'utilisateur pour l'intensité du courant entre le circuit intermédiaire (15) et le réseau d'alimentation (13), en particulier pour un intervalle de temps défini par l'utilisateur, ne soit pas dépassée, et/ou **en ce que** le dispositif de régulation (17) est configuré de telle sorte qu'après la transmission du signal de commande à l'au moins une unité de stockage d'énergie (16), une nouvelle régulation ne commence qu'après une durée définie par l'utilisateur, et/ou **en ce que** le dispositif de régulation (17) est relié par au moins une ligne de mesure (17a) à l'au moins une ligne (14) entre le réseau d'alimentation (12) et le circuit intermédiaire (15) et/ou par au moins une ligne de données (30) à l'au moins une unité de stockage d'énergie électrique (16).

7. Circuit selon l'une des revendications 1 à 6, **caractérisé en ce que** le dispositif de régulation (7) est configuré de telle sorte que, en cas de flux d'énergie de l'au moins une unité de stockage d'énergie électrique (16) vers le circuit intermédiaire (15), une valeur efficace de courant virtuelle est déterminée, laquelle correspond au flux d'énergie de l'au moins une unité de stockage d'énergie électrique (16) vers le circuit intermédiaire (15), et que le flux d'énergie entre le circuit intermédiaire (15) et l'au moins une unité de stockage d'énergie électrique (16) est régulé en fonction de la valeur efficace de courant virtuelle si la valeur efficace de courant virtuelle dépasse une valeur seuil.

8. Circuit selon l'une des revendications 1 à 7, **caractérisé en ce que** le dispositif de régulation (17) peut être relié à au moins une unité de commande (26) de l'au moins une unité de stockage d'énergie (16) et/ou à au moins un convertisseur de tension continue (25) de l'au moins une unité de stockage d'énergie (16), et/ou **en ce que** le dispositif de régulation (17) peut être relié de manière amovible à la ligne (14) et/ou à l'unité de stockage d'énergie (16) et/ou peut être monté a posteriori, et/ou **en ce que** le dispositif de régulation (17) comporte au moins une unité de traitement (34) destinée à générer un signal de commande et/ou au moins un, en particulier au moins deux, circuits redresseurs (31) reliés à l'unité de traitement (34).

9. Circuit selon l'une des revendications 1 à 8, **caractérisé en ce que** le circuit intermédiaire (15) et/ou l'au moins une unité de stockage d'énergie électrique (16) fonctionnent en tension continue, et/ou **en ce que** le circuit intermédiaire (15) comporte un convertisseur de fréquence (15), en particulier un redresseur à diodes.

10. Circuit selon l'une des revendications 1 à 9, **caractérisé en ce que** l'au moins une unité de stockage d'énergie (16) comporte au moins une unité de commande (26), au moins un élément de stockage d'énergie (27) et/ou au moins un convertisseur de tension continue (25).

11. Circuit selon l'une des revendications 1 à 10, **caractérisé en ce que** l'au moins une unité de stockage d'énergie électrique (16) comporte une première zone de stockage électrique qui est configurée pour stocker, dans la première zone de stockage électrique, de l'énergie électrique générée par le consommateur électrique (13) et pour me.re de l'énergie électrique provenant de la première zone de stockage électrique à la disposition du consommateur électrique (13), en particulier en cas de besoin énergétique accru du consommateur (13).

12. Circuit selon l'une des revendications 1 à 11, **caractérisé en ce que** l'au moins une unité de stockage d'énergie électrique (16) comporte une deuxième zone de stockage électrique qui est configurée pour me.re de l'énergie électrique provenant de la deuxième zone de stockage électrique à la disposition du consommateur (13) lorsque la tension du réseau d'alimentation électrique (12) est inférieure à un paramètre de défaillance prédéfini.

13. Agencement de circuit électrique (10) comportant un circuit (11) selon l'une des revendications 1 à 12, le circuit (11) étant relié au réseau d'alimentation électrique (12) et au consommateur électrique (13).
